**Europäisches Patentamt**

**European Patent Office**

**Office européen des brevets**

(19)

(11) Publication number: **0 028 772**

**A1**

(12) # EUROPEAN PATENT APPLICATION

(21) Application number: **80106662.2**

(22) Date of filing: **30.10.80**

(51) Int. Cl.³: **A 47 J 31/30**

(30) Priority: **07.11.79 IT 2709279**

(43) Date of publication of application:
**20.05.81 Bulletin 81/20**

(84) Designated Contracting States:
**AT BE CH DE FR LI LU NL**

(71) Applicant: **Fabbri, Angelo**
**Via M. Polo, 15**
**I-40100 Bologna(IT)**

(72) Inventor: **Adinolfi, Stefano**
**Via dei Colli, 19**
**I-40100 Bologna(IT)**

(74) Representative: **Modiano, Guido et al,**
**MODIANO & ASSOCIATI S.A.S. Via Meravigli, 16**
**I-20123 Milan(IT)**

(54) **Coffee-making machine.**

(57) The coffee-making machine comprises a pressure boiler which has a lower chamber (1) intended to contain water and an upper chamber (2) intended to collect the steam generated in delivering heat to the water. A valving member (33,34) is operative to put the upper chamber (2) in communication with the outside and to control its pressure. A conduit (10, 29) is intended for the water under pressure to flow therethrough and has a pick up end drawing from the lower chamber (2), and a delivery end which opens to the outside; the conduit (10, 29) is intersected by a shutter member (43), which is movable between a shut off position and a position allowing said flow. By means of clamping members (59a,b), a filter (22), for ground coffee or the like beverage products, can be applied from the outside at the delivery end of the conduit (10,29).

EP 0 028 772 A1

./...

FIG-1

This invention relates to a coffee-making machine or "coffee-pot" machine equipped with an outside filter.

With conventional domestic coffee-making machines, the filter for the ground coffee is placed between a lower vessel, wherein water is poured, and an upper vessel, wherein the beverage is collected: upon exposure of the lower vessel to a heat source, as soon as the steam being released from the water applies a sufficient pressure, the water begins to raise toward the upper vessel and flows through the powder contained in the filter, which is thus brought to infusion. Thus, in such machines, the coffee powder is not utilized in an appropriate way. In fact, already prior to the water flowing through the filter, the coffee powder contained therein is subjected to the high temperature reached by the metal walls of the coffee-making machine and is damaged thereby; then, as the water begins to flow through the coffee powder, which is still rich, the temperature of the water itself is still considerably lower than the boiling temperature; the water temperature reaches instead acceptable levels only at a later time, while the powder is already spent.

For domestic use, there exists nowadays also coffee-making machines which have the coffee filter attachable from the outside and which reproduce to a smaller scale the systems for the so-called "espresso" coffee employed by bars; the beverage prepared with this kind of machines is undoubtedly of a superior quality compared to that obtained with said coffee-making machines with inside filter.

However, also these coffee-making machines are complex, expensive and not completely reliable in operation.

This invention sets out to provide a coffee-making machine whereby the user can cause one or several filters, containing the product to be brought to infusion, to be passed by an amount of water which, while being left to the user's discretion, has constantly an optimal temperature for the infusion itself.

Within that general aim, it is possible to arrange that the coffee-making machine according to this invention is structurally very simple, easy and economical to manufacture, reliable and effective in operation, convenient to use, and issues a beverage of high quality quite comparable to that obtained with expensive bar systems.

According to one aspect of the present invention, there is provided a coffee-making machine characterized in that it comprises a small pressure boiler having a lower chamber intended for containing water and an upper chamber intended to be filled with the steam released upon delivering heat to said water, a valving member adapted for putting said upper chamber in communication with the outside and for controlling the pressure of said upper chamber, a conduit intended for said pressurized water to flow therethrough and having a pick up end drawing from said lower chamber and a delivery end opening to the outside, a shutter member passing through said conduit and movable between a water flow shut off position and a position allowing said water flow therethrough, a filter for coffee powder or the like beverage products, associable from the outside at said delivery end of said conduit by means of clamping members.

Further details will be apparent from the description of a preferred embodiment of the coffee-making machine, illustrated in the accompanying drawing, where:

Figure 1 is a vertical cross-section through this coffee-making machine; and

Figure 2 is a horizontal cross-section, partly cut away, of this coffee-making machine.

With particular reference to the cited figures, the instant coffee-making machine comprises a sort of pressure boiler comprising a lower chamber 1 and an upper chamber 2, the former being intended for containing water, the latter for containing steam generated when heat is delivered to said water. The lower chamber 1 includes a bell member 3 and a bottom 4, preferably drawn from stainless steel sheet. The bottom 4 forms peripherally a sort of inverted channel and terminates in a downwardly folded edge 4a which is engaged and clamped by an upturned portion 3a, extending toward the top and the inside, of the lower edge of the bell 3. On the planar top of the bell 3, there may be seen two offcentered and opposite areas; one thereof, 3b, provides a resting surface for the cups for collecting the beverage produced by the coffee-making machine;at the other area, the top of the bell is provided with slots 5;arranged evenly around a central hole 6,and is covered by a cup member 7.    The bottom of the cup is also provided with slots 8, located around a respective central hole, which is in alignment with the hole 6; through the two holes, there is inserted the upper end of an inside threaded bushing 9: above the two holes, that end is flanged such as to fold engage the cup 7 with the bell 3, the folded seam area of the cup to the bell being such as to align the slots 8 with the slots 5. Below the two holes, on the bushing 9 is press-fitted the upper or top end of a small tube 10 which terminates close to the bottom 4 of the lower chamber 1 and is accordingly secured to the walls of the chamber itself.

Around the base of the cup 7, there is partly accommodated an annular seal 11, whereon is tightly engaged,by pressing against the top surface of the bell 3, the  lower end of the tube 12, constituting said upper chamber 2. Said  lower end is intended for centering around the cup 7, through the slots 8 whereof and the slots 5 of the bell the inside of the lower chamber 1 communicates with the inside of the upper chamber 2. The tube 12 is also intended for interposition between the bell 3 and the top body 13 of the coffee-making machine which overlies the lower chamber 1. The top body 13 comprises a basin   14, a perforated cover or lid 15, and a finned block 16 fixed    to the bottom of the basin 14 inside the latter; the basin 14 and cover or lid 15 are preferably formed from sheet stainless steel, whereas the block 16 is preferably a light alloy casting. The bottom of the basin 14 is provided with two large openings corresponding  to said offcentered areas of the bell 3; at one of said openings, indicated at 17, there is fold seamed the top end of the bottom 12, which is tightly engaged against the base of the block 16 with the interposition of an annular seal 18;the other opening,which corresponds  to the area 3b of the bell, is formed with a downward facing contour 19. Above this contour, the base of the block 16 has an undercut accommodating a perforated disk 20; the disk is supported by an annular seal 21, which is held peripherally between the block 16 and bottom of the basin 14. Against the seal 21, as will be apparent hereinafter, there makes tight connection the top of the external filter 22 of the coffee-making machine. The block 16 is secured to the bottom of the basin 14 by means of bolts 23; the cover or lid 15 rests on the rim of the basin 14 and on small columns 16a  which  protrude upwardly from the block 16; each columns is passed through by a vertical bore wherein a respective screw 24 is inserted which clamps the cover 15 to the column by engaging with a nut 25, constituting an insert of the block 16 casting.

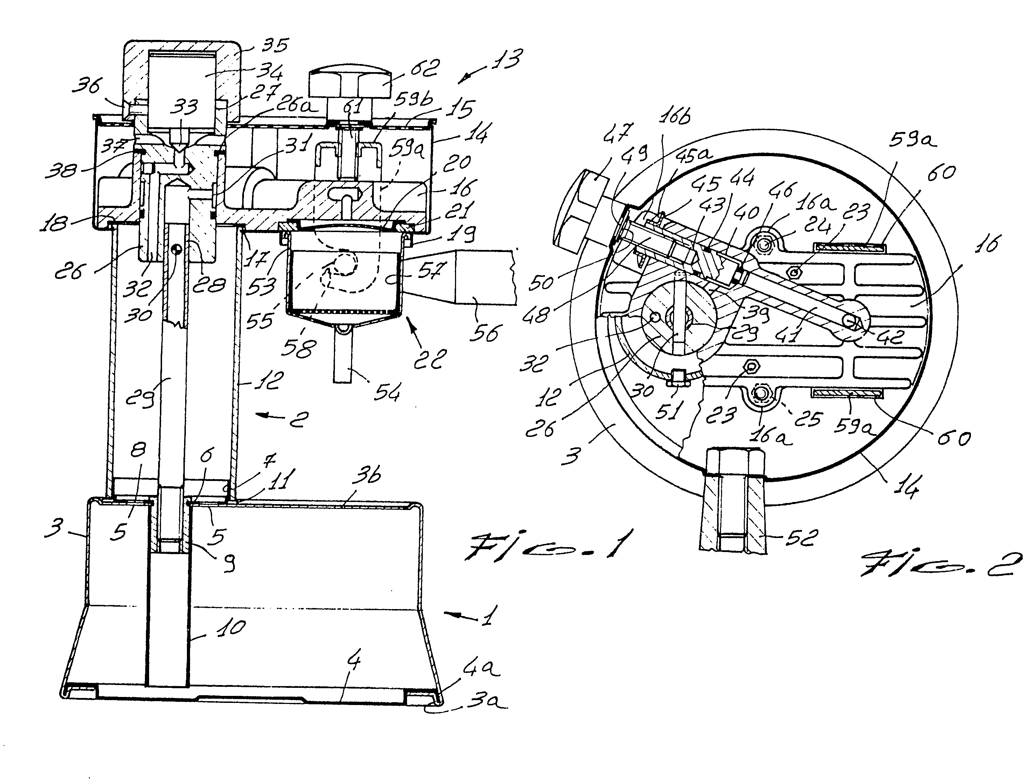

At the opening 17 of the tube 12, the block 16 and cover 15 are passed through vertically by respective bores wherein a large pin 26 is mounted rotatably and slidably which has a small well 27 at the top, and at the bottom has an axially extending blind hole 28. In this hole there is inserted the top portion or section of a small tube 29, which is affixed to said pin 26 by means of a peg 30; the tube 29 is terminated at the bottom below the tube 12 having an outside thread intended for engagement with the bushing 9. The top of the hole 28 communicates, through a radial passage, with a groove 31 formed on the outside of the pin 26. A passage 32, partly parallel to the bore 28 and partly radial to the pin 26, puts the upper chamber 2 in communication with the bottom of the well 27, whereto it opens with a bore or hole which is normally obstructed by a needle 33. The needle is a downwardly extending integral portion of a small piston 34, which is arranged slidable vertically through the well 27 and overlying cap 35, which is formed from an insulating material and is attached to the pin 26 by means of a screw 36. The bottom of the well 27 is vented to the outside through a hole 37 drilled diametrically to the pin 26. Below the hole 37, the pin 26 has a shoulder 26a which is adapted for resting on the block 16 with the interposition of the seal 38, when, by acting on the cap 35, the lower end of the tube 29 is threaded into the bushing 9 and the assembly comprising the top body 13 and upper chamber 2 is tightened against the lower chamber 1, thereby putting the coffee-making machine in its operative position. In this condition, the hole 37 is located below the cover 15 and the groove 31 is aligned with the connection bore or hole 39, wherethrough a first and second conduit portions, extending vertically and comprising respectively the tube 10 and tube 29, are put in communication with a seat portion 40 of a third horizontal portion of that same conduit, which third portion is formed inside the block 16, as an extension of the seat 40 . That same third portion has a portion 41 which opens downwards and above the disk 20 by means of the delivery end 42. In the seat 40, there is slidable in sealed relationship a shutter member 43; the tight seal connection is accomplished by an annular seal 44 inserted in a groove on that same shutter; the rotation of the shutter is inhibited in that on its end, outside of the seat 40, there is press-fitted a sleeve with a lip 45 having one portion 45a bent to form a tab which is arranged to slide adjacently a flat 16b on the block 16. The other end of the shutter 43 has reduced diameters and carries a gasket 46: thus, as the shutter is pushed inwardly, it shuts off the passage between the seat 40 and portion 41 of the third portion of said conduit, the gasket 46 providing a tight seal on the conical abutment formed at the passage itself; as, on the contrary, the shutter is moved outwardly, communication is established between the hole or bore 39 and the portion 41. The shutter takes its shut off position or its free passage position by manipulating, in the related direction and from the basin 14 outside, on the knob 47 of a screw 48 which is inserted into the basin and threadably engages a threaded hole, drilled axially through the shutter portion facing outwardly; the screw 48 is mounted rotatably on the basin, wherefrom it cannot slide off because the wall thereof is interposed between the knob 47 and a washer 49, which is retained on the screw 48 by a snap ring 50. The knob 47 is made of a thermally insulating material. It should be noted that said peg 30 securing the tube 29 to the pin 26 is mounted (refer to Figure 2) such that,at one end,it leaves the related diametrical bore of the pin 26 partly unobstructed whereas,at the other end it protrudes out of the pin, below the block 16: after it has been installed, therefore, the peg 30 prevents the pin 26 from sliding out of the block 16, thus defining the top travel limit of the pin. Actually, as for its installation, the pin 26 is inserted into the block 16, the peg 30 is entirely within that same pin; then, the securing peg is aligned with a hole in the tube 12, wherein a conventional small safety valve 51 is subsequently installed; through this hole, one finally acts on one end of the securing peg to cause the other end to come out of the pin 26. Obviously, the small valve 51 is calibrated to only put the inside of the tube 12 in communication with the outside in the remote event that the pressure of the steam contained in the tube 12 reaches higher values than that where the plunger 34 is raised and the passage 32 communicates with the vent hole 37. It should be further noted that the top body 13 is provided with an insulating handle 52 attached externally and radially to the basin 14.

The filter 22 comprises an outer cup 53, which has its upper edge folded over and its conical bottom converging downwardly to feed the top of a double spout 54 for pouring the beverage out. The cup 53, at two diametrically opposed positions thereof, is provided with respective pin-like outer projections 55; it is also provided with a handle 56 projecting radially and being perpendicular to the alignment of the projections 55. The filter or percolator further comprises an inner cup 57, shallower than the cup 55; the cup 57 has its bottom flat and perforated, and arranged to remain spaced apart from the top of the spout 54. The projections 55 are intended for engagement by respective hooks 58, formed downwardly by the arms 59a of a bridge including also the cross-member 59b. The hooks 58 are located below the top body 13 and face oppositely to each other: that shown in the figure faces the tube 12. The cross-member 59b overlies the block 16 and underlies the cover or lid 15; the arms 59a are slidable vertically on either sides of the block 16 and go through respective slits 60 which are formed in the bottom of the basin 14 at opposite locations tangential to the contour 19. At the center of the cross-member 59b, there is threaded a screw 61 having a knob 62, which screw and knob are identical to those respectively indicated at 48 and 47. The screw 61 acts against the block 16 and is mounted on the cover 15 in the same manner the screw 48 is mounted on the basin 14.

The coffee-making machine operates as follows. With the assembly including the upper chamber 2 and top body 13 removed from the chamber 1, water is poured into the latter through the cup 7. By acting on the cap 35, that assembly is then clamped to the lower chamber by screwing the tube 29 to the bushing 9. At this point, with the shutter 43 in its shut off position, the coffee-making machine is exposed to a heat source, such as by placing it over a stove; however, it would also be possible to provide an electric resistor in the lower chamber. Water generates steam which flows into the upper chamber 2 and applies a gradually increasing pressure to the water contained in the chamber 1 and to the needle 33. By using an adequately heavy plunger 34, in the chamber 2 a pressure is reached of about 1.3 $Kg/cm^2$, which coincides with a temperature of the water contained in the chamber 1 which approximates 125°C, i.e. higher than the temperature whereat water boils under atmospheric pressure. By continued heat application, the steam pressure is increased until the plunger 34 lifts up and steam is released from the vent 37 until the desired pressure is restored; the exiting steam jet indicates that the infusion water is at the desired temperature and the coffee-making machine is ready for the preparation of the beverage. Then, the cup 57 of the filter 22 is filled with ground coffee or other similar products (e.g. barley or tea); next, the filter 22 is placed below the contour 19 and rotated such that its projections 55 face the hooks 58: further, the filter is raised until the rim of the cup 53 contacts the seal 21. Presently, the filter is rotated from right to left, thereby its projections engage with the hooks 58, which should not be very shallow. By acting on the knob 62 in the opposite direction, with a few turns of the screw 61 and the application of a small effort, the bridge 59a-b is lifted such that the filter is clamped tight against the seal 21. At this point, after placing two cups in the region 3b under the double spout 54, by acting on the knob 47, the shutter 43 is moved to its open position: under the pressure raised in the chamber 2, the high temperature water contained in the chamber 1 flows over a conduit 10-29-41, and after passing the jet divider disk 20, flows through the powder contained in the cup 57 to produce the beverage by infusion, which flows out from the spout 54. Initially, the beverage flows out at a high concentration, and becomes gradually more diluted as the powder is spent. The more concentrated fractions may be separated by temporarily shutting off the water flow through the knob 47, such as to bring the shutter 43 to the shut off position; then, after placing fresh cups under the spout 54, the shutter can be re-opened. The shutter closing and opening operation can also be repeated upon reloading the filter 22 with a fresh powder charge. It should be noted that, after closing the shutter, the operation of loosening the screw 61 to remove the filter is a gradual one, thereby any residual pressure can be released gradually without producing hazardous sprays; after loosening the screw, the filter is disengaged from the hooks 58 by turning it from left to right and then lowering it downwards. Thus, with this coffee-making machine few or several cups of coffee can be made, according to necessity and the capacity of the chamber 1; the coffee powder is always utilized in an optimum manner; the beverage concentration can be adjusted as desired; the quality of the beverage is definitely a high one.

In practicing the invention, the shapes, dimensions, and materials may be any ones to suit individual requirements.

C L A I M S

1. A coffee-making machine, characterized in that it comprises a small pressure boiler having a lower chamber (1) intended for containing water and an upper chamber (2) intended to be filled with the steam released upon delivering heat to said water, a valving member adapted for putting said upper chamber (2) in communication with the outside and for controlling the pressure of said upper chamber, a conduit intended for said pressurized water to flow therethrough and having a pick up end (10) drawing from said lower chamber (1) and a delivery end opening to the outside, a shutter member (43) passing through said conduit and movable between a water flow shut off position and a position allowing said water flow therethrough, a filter (22) for coffee powder or the like beverage products, associable from the outside at said delivery end of said conduit by means of clamping members.

2. A coffee-making machine according to Claim 1, characterized in that said conduit has a first portion (10) defining said pick up end and a threaded portion, being fixed to said lower chamber (1) and oriented towards the communication region of the latter with said upper chamber (2), a second portion (29) adapted to be received in said upper chamber (2) and a top body (13) of said small boiler threaded at the bottom such as to threadably engage with said threaded portion of said first portion (10) and for clamping said upper chamber (2) and top body (13) to said lower chamber (1), a third portion defining said delivery end and formed in said top body (13), connecting elements being provided for interconnecting said second and third portions, said third portion being traversed by said shutter member (43) for operation from the outside of said top body (13).

3. A coffee-making machine according to the preceding claims, characterized in that said top body (13) comprises a perforated cover or lid (15), a basin (14) closed by said cover or lid (15) and a finned block (16) fixed to the bottom of said basin (14) and defining therewith two eccentric regions and forming said third portion of said conduit, and is adapted to be penetrated, through its cover (15), block (16), and bottom of said basin (14), as well as at the eccentric region related to said upper chamber, by a large pin (26) having axially attached thereto said second conduit portion (29), forming said connecting elements and defining for said valving member the seat and communication passage with said upper chamber (2) and outside venting passage (37), said pin (26) being formed with a shoulder (26a) for clamping said top body (13) and upper chamber (2) against said lower chamber (1) by mutually threading said first (10) and second conduit (29) portions together.

4. A coffee-making machine according to the preceding claims, characterized in that said valving member comprises a well-like seat (27) formed in the upper portion of said pin (26), a hole (32) defined in the bottom of said seat as the outlet of said passage of communication with said upper chamber (2), said venting passage (37) formed in the lower portion of said seat (27) and adapted for opening outside below said perforated cover (15), a small plunger (34) arranged to be vertically slidable in said seat (27) and provided at the bottom with a needle (33) effective to shut off said hole (32) by gravity, a cap (35) made of an insulating material and placed at the top of said pin (34) for the purpose of gripping and operating said pin (34) and said second conduit portion (29) and limiting the upward travel of said small plunger (34).

5. A coffee-making machine according to Claims 1, 3, characterized in that said filter (22) clamping members comprise a bridge member (59a,b) having a cross-member overlying said block (16) and underlying said cover (15), and has two arms mounted vertically slidable in said top body (13), to protrude out thereof below said top body (13) at that region thereof whereat said filter (22) is to be applied, and terminated at the bottom to define respective hooks (58) facing away from each other, and further comprise a screw (61) exposed from said cover (15), threaded in said cross-member (59a,b), and abutting against said block (16), said filter (22) being provided on the outside with two diametrically opposed projections (55) adapted for engagement upon rotation thereof with said hooks (58), and having thus the top clampable under said block (16) by threading said screw (61) to pull said bridge (59a,b).

FIG. 1

FIG. 2

1/1

0028772

| | EUROPEAN SEARCH REPORT | Application number |
|---|---|---|
| European Patent Office | | EP 80 10 6662 |

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | FR - A - 1 043 194 (WONS) <br> * The whole document * <br><br> -- <br><br> DE - C - 935 154 (WUERTTEMBERGISCHE) <br> * Figures 2,3,4; page 3, lines 1-71 * <br><br> -- <br><br> US - A - 3 405 630 (WEBER III) <br> * Figure 2; column 5, lines 48-58 * <br><br> -- <br><br> FR - A - 989 919 (ODDONE & CIE) <br> * The whole document * <br><br> -- <br><br> FR - A - 982 123 (BARTOLESI) <br> * The whole document * <br><br> -- <br><br> CH - A - 411 273 (SIEMENS) <br> * Figures 1 and 2 * <br><br> ---- | 1-4 <br><br><br> 1,3,5 <br><br><br><br> 1,2 <br><br><br><br> 1 <br><br><br><br> 1 <br><br><br><br> 3 | A 47 J 31/30 <br><br><br><br><br> TECHNICAL FIELDS SEARCHED (Int. Cl.³) <br><br> A 47 J <br><br><br><br><br> CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| The present search report has been drawn up for all claims | | |
|---|---|---|
| Place of search <br> The Hague | Date of completion of the search <br> 13-02-1981 | Examiner <br> SCHARTZ |

EPO Form 1503.1  06.78